# EUROPEAN PATENT SPECIFICATION

(11) **EP 3 845 001 B1**
(45) Date of publication and mention of the grant of the patent: **04.10.2023**
(21) Application number: 18765831.5
(22) Date of filing: 31.08.2018
(51) Int. Cl.: H04W 48/00, H04W 92/02, H04W 40/24, H04L 12/28, H04W 99/00

(54) **TRAFFIC IN A DISTRIBUTED CLOUD SYSTEM**
VERKEHR IN EINEM VERTEILTEN CLOUD-SYSTEM
TRAFIC DANS UN SYSTÈME DE NUAGE DISTRIBUÉ

(43) Date of publication of application: 07.07.2021
(73) Proprietor: Telefonaktiebolaget LM Ericsson (publ), 164 83 Stockholm (SE)
(72) Inventor: BEHRENS, Stefan, 52134 Herzogenrath (DE); CATREIN, Daniel, 52146 Würselen (DE); HERMANNS, Nikolas, 52074 Aachen (DE)
(74) Representative: Ericsson
(86) International application number: PCT/EP2018/073475
(87) International publication number: WO 2020/043307

(56) References cited:
- "3rd Generation Partnership Project; Technical Specification Group Services and System Aspects; System Architecture for the 5G System; Stage 2 (Release 15)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.2.0, 19 June 2018 (2018-06-19), pages 1-217, XP051472860, [retrieved on 2018-06-19]
- NOKIA ET AL: "NEF Services", 3GPP DRAFT; 23501_CR0367R1_5GS_PH1_(REL-15)_S2-185689- NEF-23501-CHANGES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. SA WG2, no. Newport Beach, United States; 20180528 - 20180601 10 June 2018 (2018-06-10), XP051458230, Retrieved from the Internet: URL:http://www.3gpp.org/ftp/Meetings%5F3GP P%5FSYNC/SA/Docs [retrieved on 2018-06-10]

## Description

### Technical field

The present application relates to a method for operating a control entity configured to influence a selection of one service instance from a plurality of service instances provided by a distributed cloud system. Furthermore, the corresponding control entity configured to influence the selection is provided. Additionally a method for operating an exposure entity configured to expose different type of services provided to a mobile entity through a mobile communications network is provided and the corresponding exposure entity itself. Furthermore, a system comprising the control entity and the exposure entity is provided, a computer program comprising program code and a carrier comprising the computer program.

### Background

Distributed cloud and edge computing aim at improving latency, security, policy compliance, aggregation, and availability of services by bringing service instances closer to clients in order to keep the traffic path short. To achieve these goals, it is necessary to control where workloads or service instances are placed in the network. It is also necessary to influence application traffic originating from client applications on mobile devices/ user entities such that it addresses the server closest to the user entity. To simplify the adoption of edge services it is desirable to do this without making the client device or software aware of the distributed cloud topology or of the way how the packet core works.

Existing solutions to influence or intercept application traffic for local processing at service instances exist in following categories:
- Network-wide service chaining including header manipulation. This approach has been pursued in the realm of SDN (Software Defined Network) before with limited success. It leads to complex solutions that rely on policy-based forwarding rather than IP routing and separation of concern between transport network, end devices, and applications.
- Global load balancing: distributed load balancing devices at data center locations with synchronization among them, often combined with interception and manipulation of DNS (Domain Name System) queries can be used to steer traffic to the desired service instances. Applying this approach to distributed cloud system likely requires a high number of specialized, costly load balancers across all sites.
- Anycast: all instances of the same service reside at the same IP address and routing in the networks makes sure traffic reaches the closest instance (closeness based on routing metrics). Anycast is suitable only for short lived transactions. In case of routing changes in the network, long lived sessions may be routed to a different server that lacks application state (and TCP state) for the ongoing session. This will lead to a failure of ongoing application sessions.
- DNS based solutions: use the hierarchical DNS system to return addresses of different service instances depending on where the user is. This can be realized by making users in one region connect to a DNS server in that region which in turn returns addresses of services in the same region (locality). The first problem with DNS based solutions is caching. Some client resolvers cache DNS answers even when the time-to-live has expired, making it impossible to re-direct traffic to another sever reliably. The second disadvantage is the need to deploy and manage one DNS server per Distributed Cloud location. This will present a scaling and maintenance problem when Distributed Cloud sites move closer out in the network and their number increases.

Prior art examples are: 3GPP TS 23.501 V15.2.0, "System Architecture for the 5G System; Stage 2 (Release 15)"; and 3GPP TSG-SA2 Meeting #127bis doc. nr. S2-185689, 23.501 CR 0367 rev 1 Current version: 15.1.0, Title: "NEF Services", Source to WG: Nokia, Nokia Shanghai Bell, KDDI, Ericsson, Deutsche Telekom.

Accordingly, a need exists to influence the selection of a service instance in such a way that a service instance is selected among several service instances located close to the user entity requesting the service.

### Summary

This need is met by the features of the independent claims. In the dependent claims further aspects are described. Therefore, the present invention is defined in the appended independent claims. Embodiments representing particular realizations of the invention are defined in the appended dependent claims. In the following description any reference to other embodiments or other aspects not falling under the scope of the appended claims has to be interpreted as additional supportive information for understanding the present invention.

According to a first aspect, a method for operating a control entity configured to influence a selection of one service instance from a plurality of service instances provided by a distributed cloud system is provided. Each service provides a predefined service to a data packet flow of the user entity connected to a mobile communications network. The method comprises the step of monitoring the creation of new service instances providing the predefined service in the distributed cloud system, wherein for each new service instance a corresponding location in the distributed cloud system is determined. Furthermore, for each of the newly created service instances location information is determined indicating for each service instance a corresponding nearest access point to the mobile communications network. The location information is transmitted to the mobile communications network requesting to take into account the transmitted location information for selection of a user plane entity configured to transmit at least a user data plane of the data packet flow between the user entity and one of the service instances.

Furthermore, the corresponding control entity configured to influence the selection of the service instances provided, the control entity comprising a memory and at least one processing unit, wherein the memory contains instructions executable by the at least one processing unit. The control entity is operative to work as discussed above or as discussed in further detail below.

As an alternative, a control entity configured to influence the selection of one service instance from a plurality of service instances provided by a distributed cloud system is provided, wherein each service instance provides a predefined service to a data packet flow of a user entity connected to a mobile communications network. The control entity comprises a first module configured to monitor a creation of new service instances providing the predefined service in the distributed cloud system, and configured to determine for each of the new service instances a corresponding location in the distributed cloud system. A second module of the control entity is configured to determine, for each of the newly created service instances, location information indicating for each service instance a corresponding nearest access point to the mobile communications network. The control entity furthermore comprises a third module configured to transmit the location information to the mobile communications network requesting to take into account the transmitted location information for a selection of the user plane entity configured to transmit at least the user data plane of the data packet flow of the user entity between the user entity and one of the service endpoints.

Furthermore, a method for operating an exposure entity configured to expose different type of services provided to a mobile entity through a mobile communications network is provided, wherein each type of service is provided by a plurality of service instances located in a distributed cloud system. The method comprises the step of receiving a request from a control entity configured to influence a selection of one service instance from the priority of service instances for one type of service, wherein the request comprises location information indicating for one of the service instances a corresponding nearest access point to the mobile communications network. The exposure entity furthermore transmits a request to a subscriber database of the mobile communications network requesting the subscriber database to use the location information for all subscribers requesting the use of said one type of service.

Additionally the corresponding exposure entity is provided comprising a memory and at least one processing unit wherein the memory contains instructions executable by the at least one processing unit and wherein the exposure entity is operative to work as discussed above or as discussed in further detail below.

As an alternative, an exposure entity is provided configured to expose the different type of services provided to a mobile entity through a communications network, wherein each type of services provided by a plurality of service instances located in the distributed cloud system. The exposure entity comprises a first module configured to receive a request from a control entity configured to influence a selection of one service instance from the plurality of service instances for one type of service, wherein the request comprises location information indicating for one of the service instances a corresponding nearest access point to the mobile communications network. The exposure entity comprises a second module configured to transmit a request to the subscriber database of the mobile communications network requesting the subscriber database to use the location information for all subscribers requesting the use of said one type of service.

The control entity can influence the selection of a data path between the user entity and the service instance so that the shortest possible path between the user entity and the service instance is selected as information is provided which allows selecting an access point which is close to the service instance and the user requesting the service. The information about the nearest access point to the mobile communications network is transmitted to the exposure entity, which itself can then inform the subscriber database to use this information for user entities requesting the corresponding type of service.

In addition, a system comprising the control entity as discussed above or as discussed below is provided and the exposure entity as discussed above or as discussed below.

Furthermore, a computer program comprising program code to be executed by at least one processing unit of the control entity or of the exposure entity is provided, wherein execution of the program code causes the at least one processing unit to execute a method as discussed above or as discussed in further detail below.

It is to be understood that the features mentioned above and features yet to be explained below can be used not only in the respective combinations indicated, but also in other combinations without departing from the scope of the present invention as it is defined in the appended claims.

### Brief Description of the Drawings

The foregoing and additional features and effects of the application will become apparent from the following detailed description when read in conjunction with the accompanying drawings in which like reference numerals refer to like elements.
Fig. 1 shows a schematic architectural review of the system in which a client, for accessing a service instance provided by a server is discovering the architecture of the network in order to connect to one of several service instances.
Fig. 2 is a schematic view of the system of Fig. 1 when a traffic from a client to service instance is routed to the closest service instance using an anycast mechanism.
Fig. 3 shows a schematic view of the situation shown in Fig. 2 in which a link failure leads to the routing of the traffic to another service instance providing the same type of service.
Fig. 4 shows a schematic architectural review of the system including a control entity configured to influence the selection of the service instance from a plurality of service instances provided in a distributed cloud system.
Fig. 5 shows a schematic architectural review of a system in which the traffic of a user entity is directed to the closest access point based on information received from the control entity shown in Fig. 4.
Fig. 6 shows a schematic message exchange between the entities involved for selecting the closest access point for the traffic in a system of Fig. 5.
Fig. 7 shows a schematic view of a flowchart comprising the steps that are carried out at the control entity for influencing the selection of the nearest access point to the mobile communications network.
Fig. 8 shows a schematic view of a flowchart comprising the steps carried out at an exposure entity which is operated such that the closest access point is selected.
Fig. 9 shows an example schematic representation of a control entity as shown in Fig. 4 and 5 configured to influence the selection of a service instance from a plurality of service instances which is located close to the user entity.
Fig. 10 shows another schematic representation of the control entity of Fig. 9 configured to influence the selection of the service instance from several service instances.
Fig. 11 shows an example schematic representation of an exposure entity configured to receive the location information with the nearest access point from the control entity and configured to forward the location information to the subscriber database.
Fig. 12 shows another example schematic representation of the exposure entity configured to receive the location information with the nearest access point from the control entity and configured to forward the location information to the subscriber database.

### Detailed Description of Embodiments

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are to be illustrative only.

The drawings are to be regarded as being schematic representations, and elements illustrated in the drawings are not necessarily shown to scale. Rather, the various elements are represented such that their function and general purpose becomes apparent to a person skilled in the art. Any connection or coupling between functional blocks, devices, components of physical or functional units shown in the drawings and described hereinafter may also be implemented by an indirect connection or coupling. A coupling between components may be established over a wired or wireless connection. Functional blocks may be implemented in hardware, software, firmware, or a combination thereof.

Within the context of the present application, the term "mobile entity" or "user equipment" (UE) refers to a device for instance used by a person (i.e. a user) for his or her personal communication. It can be a telephone type of device, for example a telephone or a Session Initiating Protocol (SIP) or Voice over IP (VoIP) phone, cellular telephone, a mobile station, cordless phone, or a personal digital assistant type of device like laptop, notebook, notepad, tablet equipped with a wireless data connection. The UE may also be associated with non-humans like animals, plants, or machines. A UE may be equipped with a SIM (Subscriber Identity Module) or electronic-SIM comprising unique identities such as IMSI (International Mobile Subscriber Identity), TMSI (Temporary Mobile Subscriber Identity), or GUTI (Globally Unique Temporary UE Identity) associated with the user using the UE. The presence of a SIM within a UE customizes the UE uniquely with a subscription of the user.

For the sake of clarity, it is noted that there is a difference but also a tight connection between a user and a subscriber. A user gets access to a network by acquiring a subscription to the network and by that becomes a subscriber within the network. The network then recognizes the subscriber (e.g. by IMSI, TMSI or GUTI or the like) and uses the associated subscription to identify related subscriber data. A user is the actual user of the UE, and the user may also be the one owning the subscription, but the user and the owner of the subscription may also be different. E.g. the subscription owner may be the parent, and the actual user of the UE could be a child of that parent.

As will be described below, the application provides a control entity between a cloud orchestration system and a mobile packet core of a mobile communications network that influences a node selection and a packet core such, that a carrier for a data packet flow, by way of example a GTP tunnel termination or the terminations are placed near application server instance locations in the distributed cloud system. By doing so, the present application removes the disadvantage of anycast routing such that stateful sessions are not broken when topology changes occur in the IP network. This enables network operators to use anycast routing as an elegant solution that ensures traffic locality in distributed cloud systems. Furthermore, application developers are given full flexibility through existing cloud orchestration Application Programming Interfaces, APIs, to place their workloads where they want and steer traffic to the instance closest to the UE without having to deal with the complexity of the mobile communications network.

The concept described above as all described in further detail below, can be used together with any kind of mobile communications network, be it a 3G, 4G or 5G network.

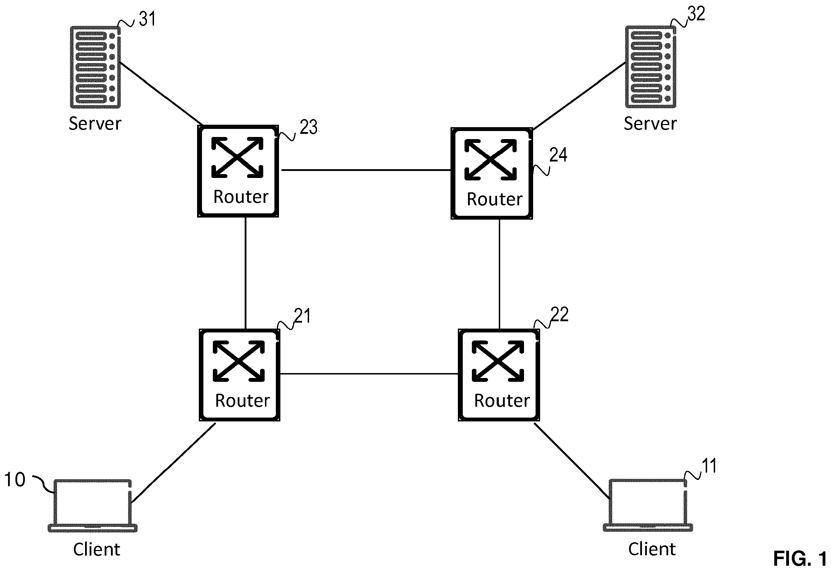

Fig. 1 shows a schematic architectural view in which different clients, by way of example user entities 10 or 11 want to use a type of service provided by different service instances 31 or 32. In the network different routers or routing entities 21-24 connect the service instances 31 and 32 to the client devices or user entities 10, 11.

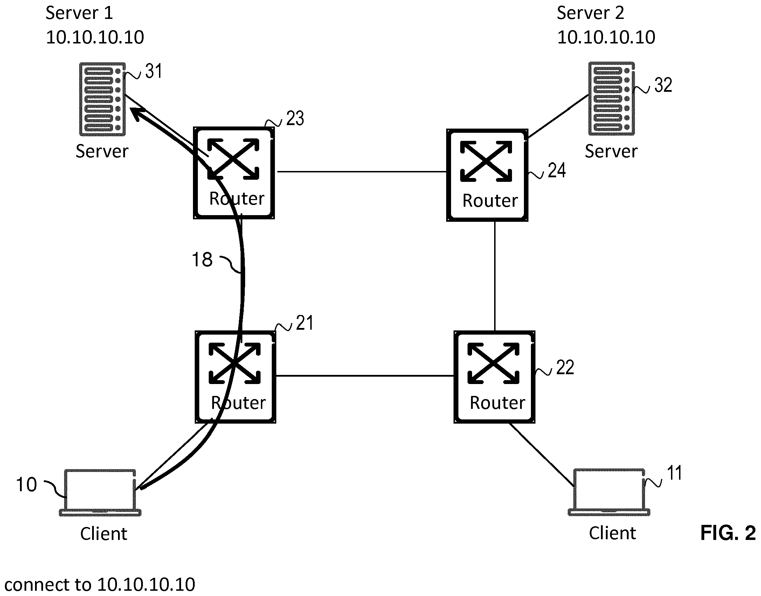

In connection with Fig. 2 a situation of an anycast message is shown wherein both service instances 31, 32 have the same IP address as indicated in the figure. When the client 10 wants to connect one of the service instances in the network through the routers 21-24 it is made sure that the closest service instance, here service instance 31, is selected as shown by the data packet flow 18.

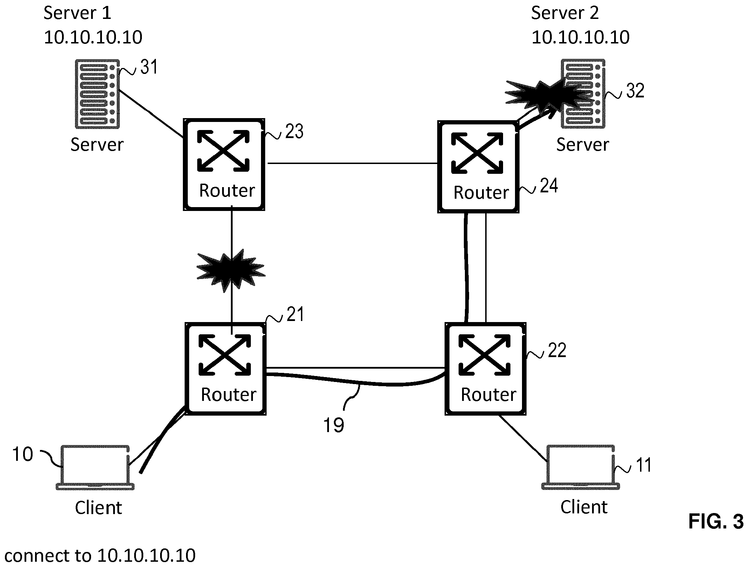

In Fig. 3 it is shown that a link failure can occur between router 21 and 23. As a consequence, the routing changes in the network and for the anycast traffic user data plane 19 is transmitted through routers 22 and 24 to service instance 32. However, for long living sessions this service instance lacks the application state for ongoing data packet session. This leads to a failure of the data packet session as indicated.

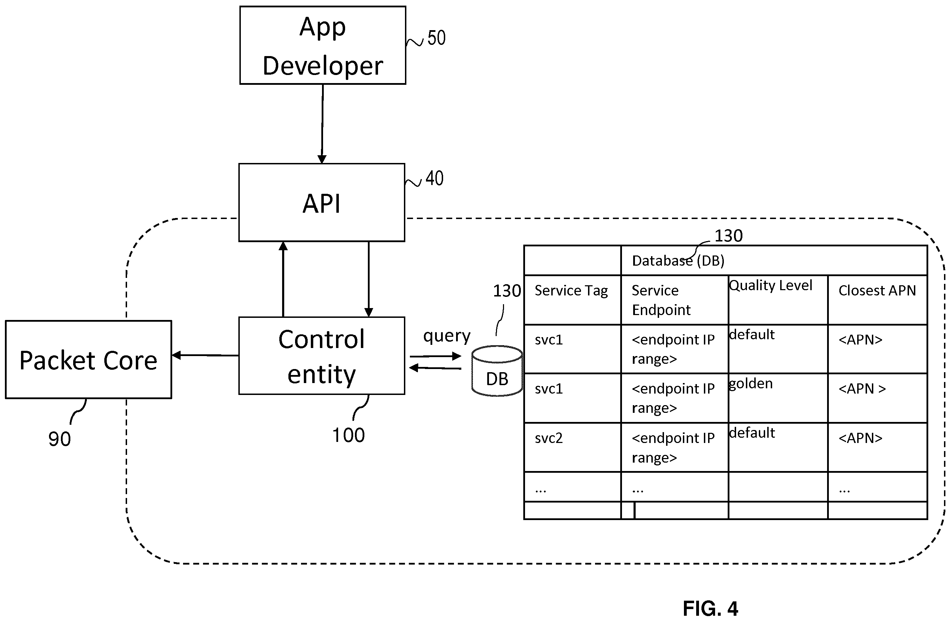

As shown in Fig. 4 a control entity 100 is provided between a cloud orchestration system where the Application Programming Interface (API) 40 and the application developer 50 are shown schematically. The cloud orchestration system can be a container orchestration system which allows application developers to create Application Programming Interfaces objects of type "Service" or "Ingress" to act as a façade for the actual service implementations inside pots or containers. The container implementations are called Endpoints when used in combination with services. Labels and other mechanisms such as custom schedulers can be used by application developers to control the placement of service instances in a distributed cloud environment. The client devices or user entities use services to discover and address server implementations. As the cloud orchestration system such as Kubernetes does not provide software realizations for services of type load balancer and for ingresses, it is up to the cloud provider to implement these. The present application proposes the control entity 100 that makes it feasible to implement load balances and ingresses using anycast IP addresses. This means that the same IP address is assigned to multiple service instances and the selection of the closest instance is simply done by IP routing algorithms like shortest path first, SPF. The network itself becomes the distributed load balancer. By using GTP (GPRS tunneling protocol) tunnels of the mobile communications network to steer application traffic to points near the service implementation, the risk of state loss in case of a network topology change is minimized.

The control entity 100 is provided that watches the creation of service endpoints or service instances in the cloud environment, such as the container orchestration system. The control entity 100 then interacts with the packet core 90 shown in Fig. 4 and transmits information about the location where the service instance has been placed. This has the advantage that application developers are free to influence the placement of the service instances without having to be aware of the underlying traffic steering in the mobile communications network. The packet core 90, based on the transmitted location information comprising for each service instance the corresponding nearest access point to the mobile communications network, triggers the selection of a user plane function such that the user plane flow, e.g. the GTP tunnel termination is placed close to the application service instance. Accordingly, the present application ensures traffic locality by using existing mechanisms in mobile networks to steer traffic to the location of the application servers. The present idea also reduces or completely removes the risk of anycast rerouting the different application service instances lacking the application state, as was described above as one of the main disadvantages of anycast routing solutions. By way of example, placing the GTP tunnel termination to the same local network, LAN, where the endpoint resides, the risk of traffic rerouting to a remote server instance due to a link failure can be eliminated.

As shown in Fig. 4, the closest access point can also depend on the user entity requesting the service. To this end the database 130, as shown comprises the parameter of the quality level, which provides information about an importance of a subscriber. By way of example, the nearest access point selected for a more important user (golden in Fig. 4) may be different to an access point for a less important user which, when they are located in the same place are directed to different access points. The more important user could use the service provided by the edge cloud, whereas the other user may be able to use the service on a another quality level, e.g. a service instance provided in a national or central part of the distributed cloud system.

When the control entity 100 monitors the creation of a new service instance and the cloud system informs the control entity 100 that a new service instance is created, the control entity 100 matches the service identifier received from the cloud system and the endpoint IP addresses received from the cloud system, e.g. the cloud container orchestration system against a data base 130 as shown in Fig. 4 in order to determine the closest mobile network access point for the compute node running the service instance, which can be a server implementation, by way of example a virtual machine or a container.

As shown in Fig. 4, the database comprises for each type of service the service endpoint and the closest access point to the mobile communications network.

A DNS resolution of FQDN (Fully Qualified Domain Name) can be used in addition and is compatible with the approach, but is not required for the solution. It is an advantage of anycast routing that it can also work with clients that use server IP addresses directly.

The invention can use a common way of describing network locations and this common understanding of locations is established between the distributed cloud system, the cloud orchestration system, the packet core 90 and the control entity 100. By way of example, the geographical coordinates such as latitude and longitude can be used to determine the distance between the network elements. In another example, the metrices of the routing protocols are used to determine the distance between network elements. As another option latency measurements can be used to determine the distance between network elements. The location information is attached to the compute nodes so that it can be referred to when placing the IT application workloads as well as when instantiating or referring to existing packet core node functions.

In 3G and 4G EPC (Enhanced Packet Core) the control entity 100 steers the selection of GGSN or P-GW to influence GTP tunnel termination to occur near the application server instance. With Control Plane User Plane Split (CUPS) present in Packet Core, the control entity influences the selection of PGW-U user plane nodes. In 5G core the control entity influences the selection of UPF (user plane functions).

In one example, the control entity 100 uses the APN (Access Point Name) override feature in the 4G packet core to influence the point of local break-out. This approach establishes a large number of APNs, one per each distributed cloud location. The packet core then overrides the Access Point Name (APN) selected by the UE in such a way that GTP tunnel termination is placed near the application workload. This approach allows to control place of local break-out with minimal or no impact on existing packet core software implementations.

In one example, where CUPS is used in 4G core, a virtual APN (vAPN) is used to apply the APN override feature for selection of user plane devices (GW-U).

The Service Capability Exposure Function (SCEF) can be extended with functionality to influence the location of local break-out and the controller device interacts with the SCEF.

The control entity 100 uses the Network Exposure Function (NEF) in a 5G Core (5GC) Service Based Architecture (SBA) network to influence the location of local break-out.

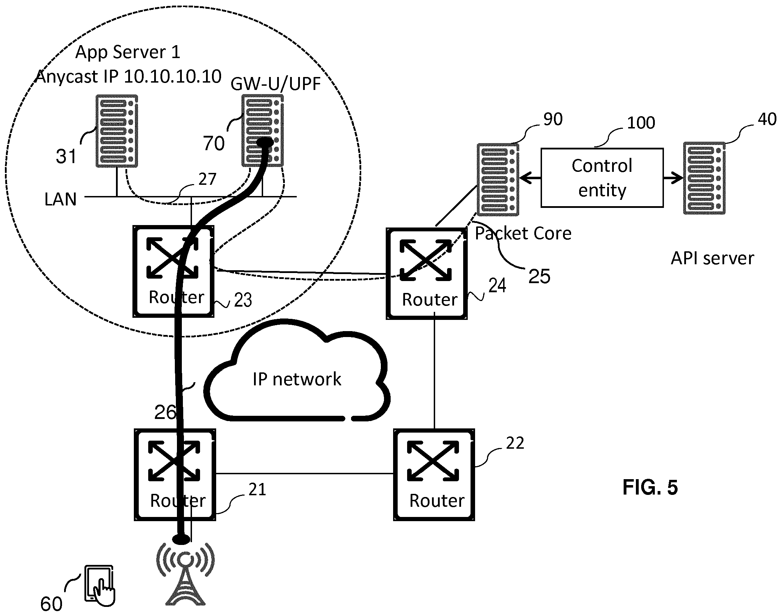

Fig. 5 gives an example how user data of data packet flow between the user entity 60 and the service instance 31 are routed taking into account location information provided by the control entity 100. As discussed above in connection with Fig. 4, the control entity 100 collects the information about the location of the different service instances provided by the distributed cloud system 30. This location information indicating for each service instance the corresponding nearest access point to the mobile communications network is transmitted to the packet core 90 as shown by the dashed line 25 of the control signaling. As will be described in further detail below, the information is used in the packet core network by entities such as the exposure entity and the subscriber database so that the access point transmitted from the subscriber database is used for setting up a GTP tunnel 26 as shown in Fig. 5 in which the user plane data traffic is routed from the user entity 60 to a user plane function or user plane gateway 70 which is located close to the service instance 31. The end user application traffic is indicated by the dashed line 27. The user of the user entity 60 is directed to the service instance as shown, another user located in the same location as user entity may be directed to another part of the distributed cloud system (not shown in Fig. 5) located closer or further away than service instance 31 in dependence of the subscription the user has. Subscriber with a higher value of importance may be directed to a closer service instance compared to subscriber having a lower value of importance.

In the following, a possible implementation is discussed in connection with a 4G mobile core network.
1. An interface, e.g. the northbound T8 interface of the SCEF (Service Capability Exposure Function) is extended with a new API to influence the placement of GTP tunnel termination for individual subscribers or classes of subscribers.
2. The control entity 100 subscribes for (watches) the creation of services and corresponding endpoints (server implementations) in the cloud orchestration system (e.g. Kubernetes).
3. The cloud orchestration system notifies the control entity 100 of creation of new service Endpoints.
4. The control entity 100 holds information linking service endpoints in the cloud container orchestration system with APNs in the mobile network. The control entity 100 matches the service identifier and endpoint IP addresses received from the cloud container orchestration system against the database 130 to determine the closest mobile network access point for the compute node running the service endpoint (server implementation, i.e. VM, Virtual Machine, or container).
5. When the control entity 100 receives notification of the creation of a service endpoint that it has knowledge of and that is registered for traffic optimization, it initiates the following procedure:
6. The control entity 100 through the extended T8 interface sends an influence request to the SCEF including a service identifier and an access point name (APN).
7. A functionality provided in the SCEF sends a request to the HSS, e.g. through the S6t interface to configure the APN override feature for all subscribers marked with the service tag, i.e. requesting this service, derived from the aforementioned database. The functionality in the SCEF can also only configure the APN override feature for the users which are tagged with that label as well, thus in dependence on their subscription. Through this a subset of users which are marked with the service tag can use the service on the Edge-Cloud. Other users would then be configured with another APN override so that they are able to use the service but on another quality level (National/Central-Cloud). So in the aforementioned database we would have more rows not only showing the Closest APN but different APNs which stand for different quality levels.

The following procedure is triggered by subscriber activity (e.g. attach or mobility):
a) The MME (Mobile Management Entity) sends update location request to HSS upon which the HSS responds with update location answer containing the subscriber profile and the APN previously stored with the subscriber profile.
b) MME selects an S-GW and a P-GW based on received APN and geographical closeness to the tracking area of the subscriber. MME sends a create session request message to S-GW containing among other data the APN, P-GW IP address, and subscriber profile. The S-GW establishes GTP tunnel between S-GW and the P-GW holding the APN and GTP termination point designated by the control entity 100 in the previous procedure.

For already existing EPS sessions, a forced EPS session termination is used to make APN change take effect.

In the examples above the invention was discussed in connection with a GTP tunnel scheme. However it should be understood that the invention is limited to this scheme. As an alternative PMIP ( Proxy Mobile IP) could be used which is being used for CDMA (Code Division Multiple Access) and WIMAX. PMIP (Proxy Mobile IPv6) is a protocol used to create connectivity between an LMA ( Local Mobility Anchor) and a MAG ( Mobility Access Gateway). PMIP uses GRE ( Generic Routing Encapsulation) tunnels. The invention discussed above with the nearest access points can also be applied in this technology.

In another example, the control entity 100 takes into consideration the capacity of server implementations in each site and only directs a limited number of EPS sessions to each site based on the available capacity.

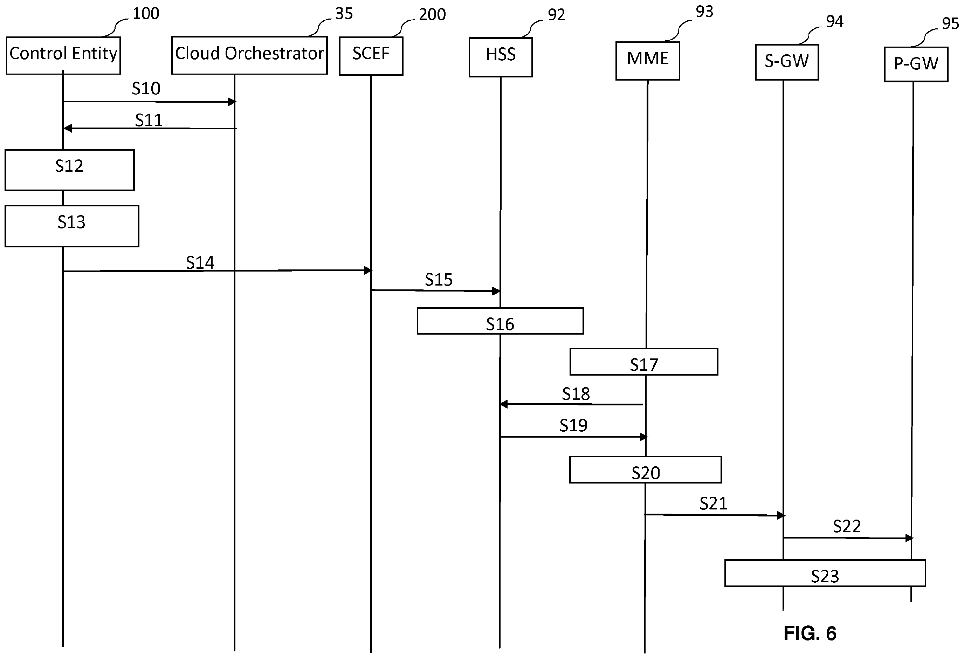

Fig. 6 summarizes some of the steps exchanged between the different entities discussed above. In step S10 the control entity 100 transmits a subscribe service/endpoint creation message to the cloud orchestrator 35 which notifies the control entity 100 of the creation of a new service instance in step S11. In step S12 the control entity checks whether the endpoint matches the service to be optimized. If this is the case, in step S13 the control entity looks up the closest access point name for the endpoint node from the database 130 and transmits in step S14 an influence request indicating the type of service and the access point name to the exposure entity 200. In step S15 the exposure entity 200 transmits an override request requesting to override the access point name for the subscribers for the indicated service to the subscriber database 92. In step S16 the subscriber database updates the subscriber profiles. In step S17 a subscriber attaches to the network or a mobility of the subscriber changes and the use of a service is requested by the user device. In step S18 an update location request is sent to the subscriber database and in step S19 the answer is transmitted back to the MME. In step S20 the MME selects a packet gateway and a serving gateway and transmits a create session request to the serving gateway which is forwarded to the packet gateway in step S22. In step S23 the GTP tunnel is finally established with the wanted termination point.

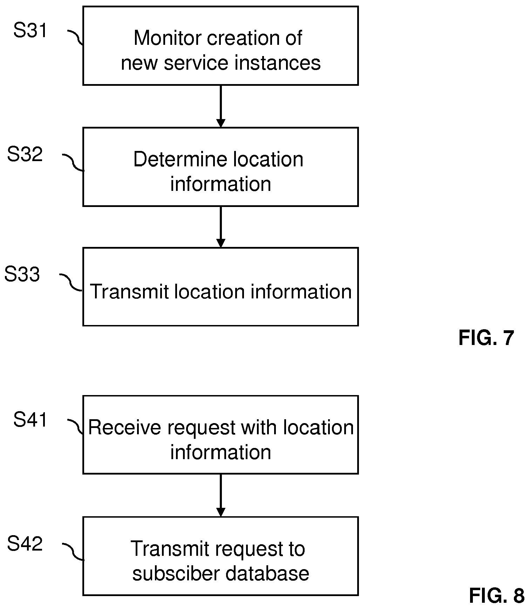

Fig. 7 summarizes some of the main steps carried out at the control entity. In step S31 the control entity monitors the creation of new service instances for a defined type of service in the distributed cloud system. For each new service instance the corresponding location in the distributed cloud system is determined and in step S32 location information is determined which indicates for each service instance the location and the corresponding nearest access point to the mobile communications network. As discussed above in connection with Fig. 4/5 the location information is determined based on the information provided in the database 130. In step S33 the location information is then transmitted to the mobile communications network and the network is requested to take into account the transmitted location information for selection of the user plane entity which is configured to transmit the user plane of the data packet flow between the user entity and one of the service instances.

As discussed above, the location information can be transmitted to the exposure entity. However, it should be understood that it may be transmitted to any other entity of the mobile communications network.

As far as the exposure entity is concerned, Fig. 8 shows some of the main steps carried out at the exposure entity 200. In step S41 the exposure entity receives the request from the control entity 100 wherein the request comprises the location information indicating for the service instance the corresponding nearest access point to the mobile communications network. Furthermore, in step S42 a request is transmitted to a subscriber database 92 of the mobile communications network, wherein the subscriber database is requested to use the location information for all subscribers requesting the use of said one type of service. The request is transmitted in response to the received request in S31.

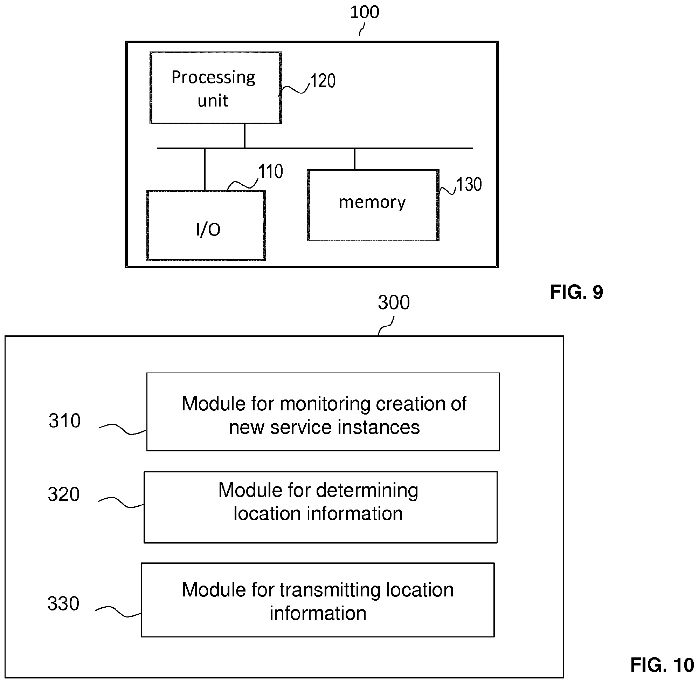

Fig. 9 shows a schematic architectural view of the control entity 100 which can carry out the above discussed influencing of the selection of the service instance. The control entity 100 comprises an interface or input/output 110 which is provided for transmitting user data or control messages to other entities and which is configured to receive user data or control messages from other entities. By way of example, the interface 110 is configured to receive the information from the distributed cloud system about the new service instances and the location in the network. The interface is furthermore configured to transmit the location information to the core network as discussed above. The control entity 100 furthermore comprises a processing unit 120 which is responsible for the operation of the control entity 100 as discussed above. The processing unit 120 comprises one or more processors and can carry out instructions stored on a memory 130, wherein the memory may include read-only memory, a random access memory, a mass storage, a hard disk or the like. The memory can furthermore include suitable program code to be executed by the processing unit 120 so as to implement the above described functionalities in which the control entity 100 is involved.

Fig. 10 shows another architectural view of such a control entity, here entity 300 which comprises a first module 310 configured to monitor the creation of the new service instances. As described above, the first module may subscribe for the creation of the service instances in the cloud orchestration system. A second module 320 is provided for determining the location information comprising the nearest access point for each service instance in the mobile communications network. A third module 330 is provided for transmitting the location information to the core network.

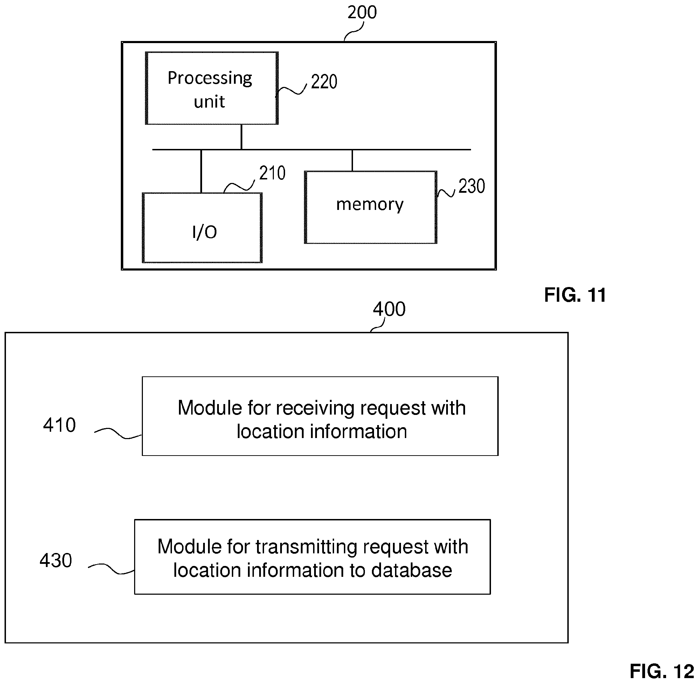

Fig. 11 shows a schematic architectural view of the exposure entity 200, wherein the entity 200 comprises an interface or input/output 210 provided for transmitting user data or control messages and configured to receive user data or control messages from other entities. The interface 210 can receive the information from the control entity 100 comprising the location information and can forward it to the subscriber database as discussed above. The exposure entity 200 can furthermore comprise a processing unit 220 which is responsible for the operation of the entity 200. The processing unit 220 can comprise one or more processors and can carry out instructions stored on a memory 230, wherein the memory can include a read-only memory, a random access memory, a mass storage, a hard disc or the like. The memory 230 can furthermore include suitable program code to be executed by the processing unit 220 so as to implement the above described functionalities in which the exposure entity is involved.

Fig. 12 shows another architectural view of an exposure entity 400 comprising a first module 410 configured to receive the request from the control entity the request comprising the location information with the nearest access point. The exposure entity furthermore transmits the request to the subscriber database and requests the subscriber database to use the location information for all subscribers requesting the corresponding type of service using a second module 420. From the above said some general conclusions can be drawn. By way of example, for the control entity which monitors the creation of new service instances, the creation of all new service instances providing different types of services can be monitored wherein the location information is determined by the control entity and transmitted for each service instance and for each type of the different types of services to the mobile communications network.

In order to monitor the creation of the new service instances, the control entity may transmit a request to the distributed cloud system requesting that the control entity be informed each time a new service instance is created in the distributed cloud system. Furthermore, a response is received to the transmitted request wherein the response comprises the new service instance and its location in the distributed cloud system.

When the location information is transmitted to the mobile communications network, it may be transmitted to the exposure entity 200 configured to expose the services provided by the mobile communications network or accessible through the mobile communications network.

When the location information is transmitted to the network, an influence request can be transmitted to the exposure entity 200, wherein the request comprises the service identifier identifying the service and an access identifier identifying the nearest access point.

When a response in response to the transmitted request is received from the distributed cloud system, it is checked whether the new service instance is provided for a service requiring traffic optimization. The location information is only transmitted to the mobile communications network when it is confirmed that the new service instance is provided for a service requiring traffic optimization.

The nearest access point in the location information may be determined based on the nearest access point using the geographical coordinates of the access point and the service instance, using the metrics of a routing protocol used to route the user data plane between the service instance and the access point or based on latency measurements carried out on the user data plane.

Furthermore, it is possible that the processing capacity of each new service instance is determined and the location information within the nearest access point is determined taking into account the processing capacity of each new service instance such that the nearest access point for one service instance additionally depends on the processing capacity of the service instance. By way of example, when the processing capacity of a service instance is smaller compared to the processing capacity of another service instance located in the neighborhood, a smaller amount of data packet sessions may be directed to the service instance with the lower processing capacity It is assumed that in anycast addressing, routing in the network makes sure packets from an end device are routed to the service instance clostest to the tunnel termination point. Thus by selecting a termination point for a certain number of session, it is possible to control the number of session that send traffic to a given service instance.

For determining the nearest access point the control entity can access a database where the nearest access point is stored for the each service instance.

The selection of the nearest access point can also depend on the mobile device / subscription of the user of the mobile device. For different subscribers different nearest access points can be stored in the database in order to be able to differentiate different subscriber levels.

As far as the exposure entity is concerned, when the exposure entity transmits the request to a subscriber database, the transmitted request can be an override request requesting to override the available access information in the subscriber database for the service instances providing said one type of service with the location information present in the request for all subscribers requesting said one type of service wherein the access information provides information where the mobile communications network connects to a packet switched wide area network such as the internet.

The above described application has the advantage that the IT application developers can control the placement of their workloads in the distributed cloud and keep the traffic local without the knowledge of the packet cores. Furthermore, the mobile communications network, e.g. the packet core, can dynamically steer the application traffic to geographically closest application service instances while avoiding disadvantages inherent to known solutions. Furthermore, the invention enables synergies between the packet core and the distributed cloud.

## Claims

1. A method performed by a control entity (100) configured to influence a selection of one service instance (31) from a plurality of service instances provided by a distributed cloud system (30), each service instance providing a predefined service to a data packet flow of a user entity (60) connected to a mobile communications network, the method comprising:
- monitoring (S12, S31) a creation of new service instances providing the predefined service in the distributed cloud system (30), wherein for each new service instance a corresponding location in the distributed cloud system (30) is determined,
- determining (S13, S32), for each of the newly created service instances, location information indicating for each service instance a corresponding nearest access point name, APN, to the mobile communications network,
- transmitting (S14, S33) the location information to the mobile communications network requesting to take into account the transmitted location information for a selection of a user plane entity (70) configured to transmit at least a user data plane of the data packet flow between the user entity (60) and said one of the service instances, wherein the creation of all new service instances providing different types of services is monitored, wherein the location information is determined and transmitted for each service instance and for each type of the different types of services,
wherein monitoring the creation of new service instances comprises:
- transmitting a request (S10) to the distributed cloud system (30) requesting that the control entity (100) be informed each time a new service instance is created in the distributed cloud system (30),
- receiving a response (S11) to the transmitted request, the response comprising the new service instance and its location in the distributed cloud system.

2. The method according to claim 1, wherein the location information is transmitted to an exposure entity (200) configured to expose services provided by the mobile communications network.

3. The method according to claim 2, wherein transmitting the location information comprises transmitting an influence request to the exposure entity (200), the request comprising a service identifier identifying the service and an access identifier identifying the nearest access point name, APN.

4. The method according to any of claims 1 to 3, wherein, when the response is received from the cloud distributed system (30), it is checked whether the new service instance is provided for a service requiring traffic optimization, wherein the location information is only transmitted to the mobile communications network when it is confirmed that the new service instance is provided for a service requiring traffic optimization.

5. The method according to any of the preceding claims, wherein the nearest access point name, APN, in the location information is determined based on at least one of the following:
- the nearest access point based on geographical coordinates of the access point and of the service instance,
- the nearest access point based on metrics of a routing protocol used to route the user data plane between the service instance and the access point,
- the nearest access point based on latency measurements carried out on the user data plane.

6. The method according to any of the preceding claims, further determining a processing capacity of each new service instance, wherein the location information with the nearest access point name, APN, is determined taking into account the processing capacity of each new service instance such that the nearest access point name, APN, for one service instance additionally depends on the processing capacity of the service instance.

7. The method according to any of the preceding claims, wherein determining location information comprises accessing a database where the nearest access point name, APN, is stored for each service instance.

8. The method according to any of the preceding claims, further determining a subscriber information of the user entity, wherein the nearest access point name, APN, depends on the subscriber information and is determined taking into account the nearest subscriber information.

9. A control entity (100) configured to influence a selection of one service instance from a plurality of service instances provided by a distributed cloud system, each service instance providing a predefined service to a data packet flow of a user entity connected to a mobile communications network, the control entity comprising a memory (130) and at least one processing unit (120), the memory containing instructions executable by said at least one processing unit, wherein the control entity (100) is operative to carry out a method as mentioned in any of claims 1 to 8.

10. A computer program comprising program code to be executed by at least one processing unit (120, 220) of a control entity (100), wherein execution of the program code causes the at least one processing unit to execute a method according to any of claims 1 to 8.

11. A carrier comprising the computer program of claim 10, wherein the carrier is one of an electronic signal, optical signal, radio signal, or computer readable storage medium.

## Patentansprüche

1. Verfahren, das von einer Steuerungsentität (100) durchgeführt wird, die dazu konfiguriert ist, eine Auswahl einer Dienstinstanz (31) aus einer Vielzahl von Dienstinstanzen zu beeinflussen, die von einem verteilten Cloud-System (30) bereitgestellt werden, wobei jede Dienstinstanz einen vordefinierten Dienst an einen Datenpaketstrom einer Benutzerentität (60) bereitstellt, die mit einem Mobilkommunikationsnetzwerk verbunden ist, wobei das Verfahren umfasst:
- Überwachen (S12, S31) einer Erstellung neuer Dienstinstanzen, die den vordefinierten Dienst in dem verteilten Cloud-System (30) bereitstellen, wobei für jede neue Dienstinstanz eine entsprechende Stelle in dem verteilten Cloud-System (30) bestimmt wird,
- Bestimmen (S13, S32) für jede der neu erstellten Dienstinstanzen, von Ortsinformationen, die für jede Dienstinstanz einen entsprechenden nächsten Zugangspunktnamen, APN, zu dem Mobilkommunikationsnetzwerk angeben,
- Übertragen (S14, S33) der Ortsinformationen an das Mobilkommunikationsnetzwerk, das anfordert, die übertragenen Ortsinformationen für eine Auswahl einer Benutzerebenenentität (70) zu berücksichtigen, die dazu konfiguriert ist, zumindest eine Benutzerdatenebene des Datenpaketstroms zwischen der Benutzerentität (60) und der einen der Dienstinstanzen zu übertragen, wobei die Erstellung aller neuen Dienstinstanzen, die unterschiedliche Diensttypen bereitstellen, überwacht wird, wobei die Ortsinformationen für jede Dienstinstanz und für jeden Typ der unterschiedlichen Diensttypen bestimmt und übertragen wird,
wobei Überwachen der Erstellung neuer Dienstinstanzen Folgendes umfasst:
- Übertragen einer Anforderung (S10) an das verteilte Cloud-System (30), das anfordert, dass die Steuerungsentität (100) jedes Mal informiert wird, wenn eine neue Dienstinstanz in dem verteilten Cloud-System (30) erstellt wird,
- Empfangen einer Antwort (S11) auf die übertragene Anforderung, wobei die Antwort die neue Dienstinstanz und ihren Ort in dem verteilten Cloud-System umfasst.

2. Verfahren nach Anspruch 1, wobei die Ortsinformationen an eine Offenlegungsentität (200) übertragen werden, die dazu konfiguriert ist, Dienste offenzulegen, die von dem Mobilkommunikationsnetzwerk bereitgestellt werden.

3. Verfahren nach Anspruch 2, wobei Übertragen der Ortsinformationen umfasst, eine Einflussanforderung an die Offenlegungsentität (200) zu übertragen, wobei die Anforderung eine Dienstkennung, die den Dienst identifiziert, und eine Zugangskennung, die den nächsten Zugangspunktnamen, APN, identifiziert, umfasst.

4. Verfahren nach einem der Ansprüche 1 bis 3, wobei, wenn die Antwort von dem verteilten Cloud-System (30) empfangen wird, geprüft wird, ob die neue Dienstinstanz für einen Dienst bereitgestellt wird, der Verkehrsoptimierung benötigt, wobei die Ortsinformationen nur an das Mobilkommunikationsnetzwerk übertragen werden, wenn bestätigt wird, dass die neue Dienstinstanz für einen Dienst bereitgestellt wird, der Verkehrsoptimierung benötigt.

5. Verfahren nach einem der vorstehenden Ansprüche, wobei der nächste Zugangspunktname, APN, in den Ortsinformationen basierend auf zumindest einem der Folgenden bestimmt wird:
- dem nächsten Zugangspunkt, basierend auf geografischen Koordinaten des Zugangspunkts und der Dienstinstanz,
- dem nächsten Zugangspunkt, basierend auf Metrik eines Routing-Protokolls, das verwendet wird, um die Benutzerdatenebene zwischen der Dienstinstanz und dem Zugangspunkt zu leiten,
- dem nächsten Zugangspunkt, basierend auf Latenzmessungen, die auf der Benutzerdatenebene ausgeführt werden.

6. Verfahren nach einem der vorstehenden Ansprüche, weiter Bestimmen einer Verarbeitungskapazität jeder neuen Dienstinstanz, wobei die Ortsinformationen mit dem nächsten Zugangspunktnamen, APN, unter Berücksichtigung der Verarbeitungskapazität jeder neuen Dienstinstanz bestimmt werden, so dass der nächste Zugangspunktname, APN für eine Dienstinstanz zusätzlich von der Verarbeitungskapazität der Dienstinstanz abhängt.

7. Verfahren nach einem der vorstehenden Ansprüche, wobei Bestimmen von Ortsinformationen umfasst, auf eine Datenbank zuzugreifen, wo der nächste Zugangspunktname, APN, für jede Dienstinstanz gespeichert ist.

8. Verfahren nach einem der vorstehenden Ansprüche, weiter Bestimmen einer Teilnehmerinformation der Benutzerentität, wobei der nächste Zugangspunktname, APN, von der Teilnehmerinformation abhängt und unter Berücksichtigung der nächsten Teilnehmerinformation bestimmt wird.

9. Steuerungsentität (100), die dazu konfiguriert ist, eine Auswahl einer Dienstinstanz aus einer Vielzahl von Dienstinstanzen, die von einem verteilten Cloud-System bereitgestellt werden, zu beeinflussen, wobei jede Dienstinstanz einen vordefinierten Dienst an einen Datenpaketstrom einer Benutzerentität bereitstellt, die mit einem Mobilkommunikationsnetzwerk verbunden ist, wobei die Steuerungsentität einen Speicher (130) und zumindest eine Verarbeitungseinheit (120) umfasst, der Speicher Anweisungen enthält, die von der zumindest einen Verarbeitungseinheit ausführbar sind, wobei die Steuerungsentität (100) betriebsfähig ist, ein Verfahren nach einem der Ansprüche 1 bis 8 durchzuführen.

10. Computerprogramm, das Programmcode umfasst, der von zumindest einer Verarbeitungseinheit (120, 220) einer Steuerungsentität (100) auszuführen ist, wobei Ausführung des Programmcodes die zumindest eine Verarbeitungseinheit veranlasst, ein Verfahren nach einem der Ansprüche 1 bis 8 auszuführen.

11. Träger, der das Computerprogramm nach Anspruch 10 umfasst, wobei der Träger eines von einem elektronischen Signal, optischen Signal, Funksignal oder computerlesbaren Speichermedium ist.

## Revendications

1. Procédé réalisé par une entité de commande (100) configurée pour influencer une sélection d'une instance de service (31) parmi une pluralité d'instances de service fournies par un système en nuage distribué (30), chaque instance de service fournissant un service prédéfini à un flux de paquets de données d'une entité d'utilisateur (60) reliée à un réseau de communication mobile, le procédé comprenant :
- la surveillance (S12, S31) d'une création de nouvelles instances de service fournissant le service prédéfini dans le système en nuage distribué (30), dans lequel, pour chaque nouvelle instance de service, un emplacement correspondant dans le système en nuage distribué (30) est déterminé,
- la détermination (S13 S32), pour chacune des instances de service nouvellement créées, d'informations d'emplacement indiquant, pour chaque instance de service, un nom de point d'accès, APN, le plus proche correspondant au réseau de communication mobile,
- la transmission (S14, S33) des informations d'emplacement au réseau de communication mobile en demandant de tenir compte des informations d'emplacement transmises pour une sélection d'une entité de plan d'utilisateur (70) configurée pour transmettre au moins un plan de données d'utilisateur du flux de paquets de données entre l'entité d'utilisateur (60) et ladite une des instances de service, dans lequel la création de toutes les nouvelles instances de service fournissant différents types de services est surveillée, dans lequel les informations d'emplacement sont déterminées et transmises pour chaque instance de service et pour chaque type des différents types de services,
dans lequel la surveillance de la création de nouvelles instances de service comprend :
- la transmission d'une demande (S10) au système en nuage distribué (30) demandant que l'entité de commande (100) soit informée chaque fois qu'une nouvelle instance de service est créée dans le système en nuage distribué (30),
- la réception d'une réponse (S11) à la demande transmise, la réponse comprenant la nouvelle instance de service et son emplacement dans le système en nuage distribué.

2. Procédé selon la revendication 1, dans lequel les informations d'emplacement sont transmises à une entité d'exposition (200) configurée pour exposer des services fournis par le réseau de communication mobile.

3. Procédé selon la revendication 2, dans lequel la transmission des informations d'emplacement comprend la transmission d'une demande d'influence à l'entité d'exposition (200), la demande comprenant un identifiant de service qui identifie le service et un identifiant d'accès qui identifie le nom de point d'accès, APN, le plus proche.

4. Procédé selon l'une quelconque des revendications 1 à 3, dans lequel, lorsque la réponse est reçue depuis le système en nuage distribué (30), il est vérifié si la nouvelle instance de service est ou non fournie pour un service exigeant une optimisation de trafic, dans lequel les informations d'emplacement ne sont transmises au réseau de communication mobile que lorsqu'il est confirmé que la nouvelle instance de service est fournie pour un service exigeant une optimisation de trafic.

5. Procédé selon l'une quelconque des revendications précédentes, dans lequel le nom de point d'accès, APN, le plus proche dans les informations d'emplacement est déterminé sur la base d'au moins l'un parmi ce qui suit :
- le point d'accès le plus proche sur la base de coordonnées géographiques du point d'accès et de l'instance de service,
- le point d'accès le plus proche sur la base de métriques d'un protocole de routage utilisé pour router le plan de données d'utilisateur entre l'instance de service et le point d'accès,
- le point d'accès le plus proche sur la base de mesures de latence effectuées sur le plan de données d'utilisateur.

6. Procédé selon l'une quelconque des revendications précédentes, comprenant en outre la détermination d'une capacité de traitement de chaque nouvelle instance de service, dans lequel les informations d'emplacement avec le nom de point d'accès, APN, le plus proche sont déterminées en tenant compte de la capacité de traitement de chaque nouvelle instance de service de sorte que le nom de point d'accès, APN, le plus proche pour une instance de service dépende en outre de la capacité de traitement de l'instance de service.

7. Procédé selon l'une quelconque des revendications précédentes, dans lequel la détermination d'informations d'emplacement comprend l'accès à une base de données dans laquelle le nom de point d'accès, APN, le plus proche est stocké pour chaque instance de service.

8. Procédé selon l'une quelconque des revendications précédentes, comprenant en outre une information d'abonné de l'entité d'utilisateur, dans lequel le nom de point d'accès, APN, le plus proche dépend de l'information d'abonné et est déterminé en tenant compte de l'information d'abonné le plus proche.

9. Entité de commande (100) configurée pour influencer une sélection d'une instance de service parmi une pluralité d'instances de service fournies par un système en nuage distribué, chaque instance de service fournissant un service prédéfini à un flux de paquets de données d'une entité d'utilisateur reliée à un réseau de communication mobile, l'entité de commande comprenant une mémoire (130) et au moins une unité de traitement (120), la mémoire contenant des instructions exécutables par ladite au moins une unité de traitement, dans laquelle l'entité de commande (100) est opérationnelle pour effectuer un procédé selon l'une quelconque des revendications 1 à 8.

10. Programme informatique comprenant un code de programme à exécuter par au moins une unité de traitement (120, 220) d'une entité de commande (100), dans lequel une exécution du code de programme amène l'au moins une unité de traitement à exécuter un procédé selon l'une quelconque des revendications 1 à 8.

11. Support comprenant le programme informatique selon la revendication 10, dans lequel le support est l'un parmi un signal électronique, un signal optique, un signal radio et un support de stockage lisible par ordinateur.
